# EUROPÄISCHE PATENTSCHRIFT

(11) **EP 0 784 168 B1**
(45) Veröffentlichungstag und Bekanntmachung des Hinweises auf die Patenterteilung: **13.06.2001**
(21) Anmeldenummer: 96118008.0
(22) Anmeldetag: 09.11.1996
(51) Int. Cl.: F16H 59/02

(54) **Schaltvorrichtung für ein Automatikgetriebe eines Kraftfahrzeuges**
Shift arrangement for automatic transmission of a motor vehicle
Dispositif de commande d'une transmission automatique d'un véhicule automobile

(30) Priorität: 10.01.1996 DE 19600526
(43) Veröffentlichungstag der Anmeldung: 16.07.1997
(73) Patentinhaber: ZF Lemförder Metallwaren AG, 49448 Lemförde (DE)
(72) Erfinder: Meyer, Jörg, 49419 Wagenfeld (DE)

(56) Entgegenhaltungen:
- DE-A- 3 717 675
- DE-A- 3 927 250
- DE-A- 4 035 713
- DE-C- 4 426 207

## Beschreibung

Die Erfindung betrifft eine Schaltvorrichtung für ein Automatikgetriebe eines Kraftfahrzeuges nach dem Oberbegriff des Patentanspruches 1.

Aus DE 44 26 207 C1 ist bereits eine Wähleinrichtung für ein Automatikgetriebe eines Kraftfahrzeuges bekannt, bei der der Wählhebel zwischen zwei verschiedenen Schaltgassen hin und her geschwenkt werden kann. Die erste Schaltgasse ermöglicht dabei den Automatikbetrieb, die zweite Schaltgasse eine manuelle Schrittschaltung. Um diese Schaltung möglichst kompakt gestalten zu können, wurden die Wählachse und die Schaltachse des Wählhebels in eine gemeinsame Ebene gelegt. Ferner stehen beide Achsen orthogonal zueinander. Eine Achse ist in dem fahrzeugfesten Rahmen gelagert. Der Wählhebel greift, in der Schrittschaltgasse stehend, formschlüssig in komplementär gestaltete Führungselemente ein, die am oberen Ende eines U-förmig gestalteten Betätigungshebels angeformt sind und die Signale der manuellen Schaltbetätigung aufnehmen und weiterleiten.
Ferner sind aus dieser Schrift Rastmittel bekannt, die Elemente mit einer abgerundeten Oberfläche aufweisen, die unter Belastung durch eine Feder in Ausnehmungen einer Kulisse eingreifen.
Diese Schaltung ist sowohl konstruktiv als auch fertigungstechnisch infolge einer großen Vielzahl von Bauteilen kompliziert und somit kostenintensiv.

Die DE 39 27 250 A1 beschreibt ferner eine Schaltvorrichtung für ein durch ein elektronisches Steuergerät beeinflusstes automatisches Getriebe eines Kraftfahrzeugs mit einem Wählhebel, durch dessen Verschwenken in einer ersten Schaltgasse verschiedene Betriebsstufen und sich automatisch schaltende Gänge mittels einer Übertragungseinrichtung anwählbar sind, wobei der Wählhebel über eine Quergasse in eine zur ersten Schaltgasse parallele, zweite Schaltgasse umschaltbar ist, in der mit dem Wählhebel durch einmaliges Verschwenken aus einer Mittellage heraus in die eine Richtung eine Hochschaltung und in die entgegengesetzte Richtung eine Rückschaltung jeweils um einen Gang bewerkstelligbar ist, wobei der Wählhebel und ein mit letzterem in der ersten Schaltgasse zusammenwirkender Mitnehmer der Übertragungseinrichtung drehbar auf einem quer zur Fahrzeuglängsrichtung verlaufenden Bolzen gelagert sind und zur Festsetzung der Übertragungsrichtung in der zweiten, vom Mitnehmer unabhängigen Schaltgasse des Wählhebels eine Sperreinrichtung wirksam wird. Aus dieser Schrift geht ebenfalls eine Federrastvorrichtung hervor, die den Wählhebel in seinen Stellungen festlegt. Der Wählhebel wird in beiden Schaltgassen um die gleiche, untere Achse verschwenkt.

Aus DE 195 26 059 ist darüber hinaus eine Schaltvorrichtung für ein automatisches Getriebe eines Kraftfahrzeuges bekannt, bei der ein Wählhebel innerhalb einer Schaltkulisse um eine tiefer als diese liegende Wählachse schwenkbar ist und in den Schaltstellungen P, R, N und D durch quer zur Längsrichtung der Schaltkulisse wirksame Federkräfte gegen seitlich zueinander versetzt liegende Rastungen, die den Schaltstellungen zugeordnet sind, gehalten ist. Die Wählachse des Wählhebels ist universalgelenkig in einem Zwischenteil gelagert. Das Zwischenteil hingegen ist an einem karosseriefesten Gehäuse um die Wählachse schwenkbar gelagert. Der Wählhebel wird in der Nebenschaltstellung (M) für schrittweises manuelles Schalten im Vergleich zu der, dem automatischen Schalten zugeordneten Schaltstellung (D), um ein höher als die Wählachse liegendes Schwenklager in Richtung der Wählbewegung zur Überbrückung von Schaltkontakten für die schrittweise Schaltung der Gänge des Getriebes manuell relativ zum Zwischenteil geschwenkt. Das obere Schwenklager wird dabei durch einen seitlich am Wählhebel vorgesehenen Zapfen gebildet. Diese Lagerungsform hat den Nachteil, daß die, über den Wählhebel beim schrittweisen Schalten eingeleitete Kraft, in der Lagerstelle ein Drehmoment erzeugt und somit unerwünschte Relativbewegungen nicht auszuschließen sind. In den Schaltstellungen P, R, N und D des Wählhebels greift dieser in Halteelemente ein. Die Halteelemente sind einstückig mit dem Zwischenteil verbunden.
Durch den Eingriff des Wählhebels in die Halteelemente wird das Zwischenteil beim Wechsel der Gangstufe zusammen mit dem Wählhebel um die Querachse geschwenkt. Eine derartige Ausführungsform einer Automatikschaltung eines Kraftfahrzeuggetriebes ist infolge der Vielzahl von Bauteilen kostenintensiv. Die ferigungsbedingten Toleranzen müssen durch aufwendige konstruktive Maßnahmen ausgeglichen werden.

Es ist Aufgabe der Erfindung, eine Schaltvorrichtung für ein Automatikgetriebe eines Kraftfahrzeuges zu schaffen, die neben einer ersten Automatikschaltgasse eine zweite Schrittschaltgasse für einen manuellen schrittweisen Schaltbetrieb aufweist und mit möglichst wenig Einzelteilen einfach und kostengünstig herstellbar ist. Die Erfindung löst diese Aufgabenstellung mit den kennzeichnenden Merkmalen des Patentanspruches 1. Ausgestaltungen der Erfindung sind Gegenstand der Unteransprüche.

Auch an Schaltvorrichtungen für Automatikgetriebe werden ständig wachsende Anforderungen bezüglich des Bedienkomforts gestellt. Aus diesem Grunde geht man verstärkt dazu über, neben den herkömmlichen Automatikschaltfunktionen auch manuelle Schaltfunktionen zusätzlich vorzusehen. Hierfür ist in der Schaltvorrichtung eine zweite, separate Schaltgasse erforderlich. Die Anwahl dieser Schaltgasse ermöglicht es dem Fahrzeugführer, in einfacher Weise das Getriebe schrittweise zu schalten. Um vom herkömmlichen Automatikschaltbetrieb in die Schrittschaltgasse zu wechseln, ist es erforderlich, den Wählhebel über eine Wählachse schwenkbar zu lagern. Ferner ist es notwendig, den Wählhebel in der Schrittschaltgasse zu fixieren.

Eine erfindungsgemäße Schaltvorrichtung für ein Automatikgetriebe eines Kraftfahrzeuges weist einen Wählhebel auf, an dessen oberer, dem Fahrzeugführer zugewandten Seite, sich ein Schaltknauf befindet.

Der Wählhebel besteht aus einem Wählhebeloberteil und einem, dieses aufnehmenden, Wählhebelunterteil. Er ist um eine Wählachse schwenkbar in einem karosseriefesten Gehäuse gelagert. Das Wählhebeloberteil ist mit dem Wählhebelunterteil verbunden. Während des Automatikschaltbetriebes steht diese Verbindung in Eingriff. Durch Schwenken des Wählhebels um die Wählachse, von der Automatikschaltgasse in die Schrittschaltgasse, wird die Verbindung zwischen Wählhebeloberteil und Wählhebelunterteil gelöst.

Hierzu dient ein Verbindungsstück, das bei der Schwenkbewegung außer Eingriff gebracht wird. Dieses Verbindungsstück durchgreift beide Wählhebelteile formschlüssig. Ein Federelement, das gegen das Verbindungsstück wirkt, sorgt dafür, daß bei der Rückstellbewegung von der Schrittschaltgasse in die Automatikschaltgasse die Verbindung zwischen beiden Wählhebelteilen wiederhergestellt wird. An dem Wählhebelunterteil befindet sich ein Koppelglied Anbindung der Schaltvorrichtung an das Automatikgetriebe des Kraftfahrzeuges. Solange sich der Wählhebel in der Automatikschaltgasse befindet, besteht die Verbindung zwischen Wählhebelunterteil und Wählhebeloberteil, sodaß der gesamte Wählhebel um eine erste, untere Schaltachse geschwenkt wird, um so die Automatikschaltstufen des Getriebes anwählen zu können. Um einen Wechsel von der Automatikschaltgasse in die Schrittschaltgasse vorzunehmen, wird der Wählhebel um die, im karosseriefesten Gehäuse gelagerte Wählachse, seitwärts verschwenkt. Dabei wird die Verbindung zwischen Wählhebeloberteil und Wählhebelunterteil außer Eingriff gebracht. Erfindungsgemäß ist ein erstes Rastmittel vorgesehen, das beim Umlegen des Wählhebels federelastisch auf diesen Wählhebel wirkt, sodaß nach Überwindung eines "oberen Totpunktes" der Wählhebel durch das Rastmittel in seiner Position in einer der beiden Schaltgassen festgelegt wird. Der Wählhebel ist somit in dieser seitwärts verschwenkten Position federelastisch gehalten. In der Schrittschaltgasse können die Getriebeschaltvorgänge durch den Fahrzeugführer manuell vorgegeben werden. Erfindungsgemäß wird hierfür nur das Wählhebeloberteil um eine zweite, obere Schaltachse verschwenkt. Diese Schaltachse wird beim Verschwenken in eine komplementäre Ausnehmung des karosseriefesten Gehäuses eingeführt und dient somit gleichzeitig als Drehachse für das Wählhebeloberteil. Die Schrittschaltung erfolgt durch einen kurzzeitigen Druck des Wählhebels in der entsprechenden Richtung. Das Wählhebeloberteil ist relativ zum Wählhebelunterteil durch Federvorspannung positioniert. Zur Simulierung des Schaltvorganges in der Schrittschaltgasse ist am Wählhebeloberteil ein zweites Rastmittel vorgesehen. Dieses Rastmittel erzeugt eine, der Bewegungsrichtung des Wählhebels entgegengesetze, Federkraft. Es drückt den Wählhebel zusätzlich in seine Ausgangsstellung innerhalb der Schrittschaltgasse zurück, soll aber keine echte Rastung darstellen, wie es bei dem ersten Rastmittel der Fall ist. Beide Rastmittel sind baugleich.

Ein Ausführungsbeispiel der Erfindung wird nachstehend, unter Bezugnahme auf die Zeichnungen, näher erläutert.

Es zeigt:
**Figur 1:**
   Eine Schnittdarstellung einer erfindungsgemäßen Schaltvorrichtung für ein Automatikgetriebe, bei der der Wählhebel in der Automatikschaltgasse steht.
**Figur 2:**
   Eine Schnittdarstellung einer Schaltvorrichtung für ein Automatikgetriebe, bei der der Wählhebel in der Schrittschaltgasse steht.
**Figur 3:**
   Eine Schnittdarstellung einer erfindungsgemäßen Schaltvorrichtung für ein Automatikgetriebe in der Seitenansicht.
   Und
**Figur 4:**
   Eine Darstellung der Verbindung von Wählhebeloberteil und Wählhebelunterteil.

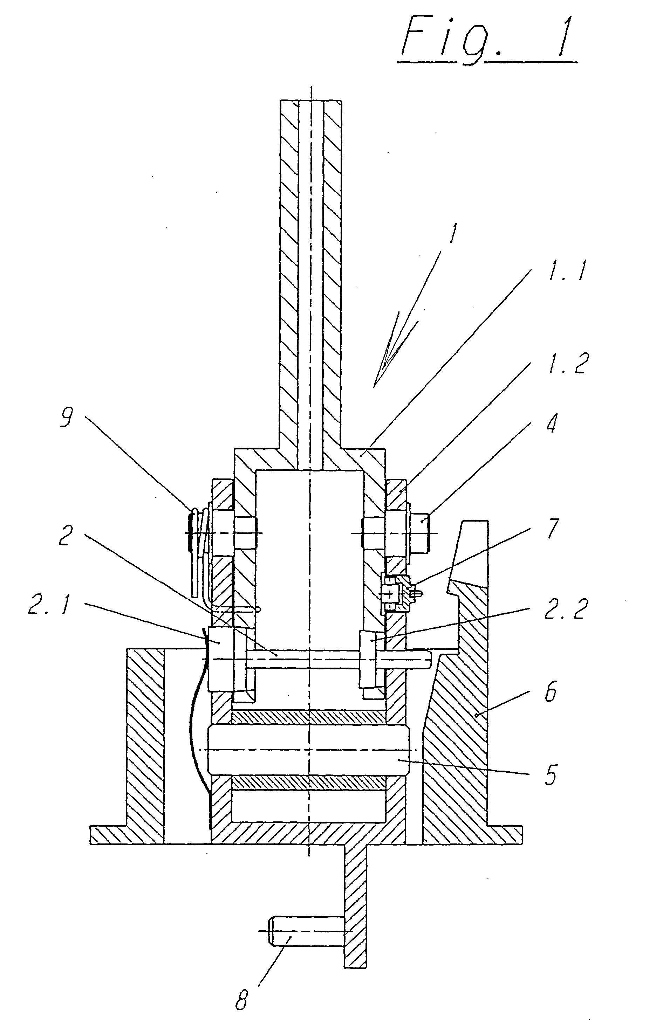

Die in Figur 1 gezeigte Schaltvorrichtung für ein Automatikgetriebe stellt eine besonders einfach herzustellende kostengünstige Variante dar. Dabei besteht der Wählhebel (1) aus einem Wählhebeloberteil (1.1) und einem dieses Wählhebeloberteil aufnehmenden Wählhebelunterteil (1.2). Der Wählhebel wird durch eine nicht dargestellte Schaltkulisse geführt. Unterhalb dieser Schaltkulisse weist das Wählhebeloberteil bei der dargestellten Ausführungsform zwei symmetrisch zur Mittenlinie des Wählhebels angeordnete Schenkel auf. Die Außenflächen des Wählhebeloberteiles liegen gleitend an den Innenflächen des Wählhebelunterteiles an.

Zur Verbindung des Wählhebeloberteils mit dem Wählhebelunterteil dient eine Kolbenstange (2) mit zwei Kolben (2.1, 2.2), die ähnlich einem Zweistufenkolben eines mehrstufigen Verdichters angeordnet sind. Die Kolben der Kolbenstange sind vorteilhafterweise zumindest bereichsweise konisch gestaltet. Sie greifen in komplementäre Ausnehmungen des Wählhebeloberteiles sowie des Wählhebelunterteiles ein. Die federelastische Verbindung zwischen Kolbenstange und Wählhebeloberteil bzw. Wählhebelunterteil wird im gezeigten Ausführungsbeispiel durch eine Blattfeder realisiert. Diese Blattfeder ist ist einseitig am Wählhebelunterteil befestigt.

Sie wirkt gegen den Kolben (2.1). Die in Figur 1 gezeigte Stellung des Wählhebels in der Automatikschaltgasse ermöglicht das Verschwenken des gesamten Wählhebels (1) um die untere Schaltachse (5). Zur Verbindung der Schaltvorrichtung mit dem Automatikgetriebe dient ein Koppelglied (8) am Wählhebelunterteil.

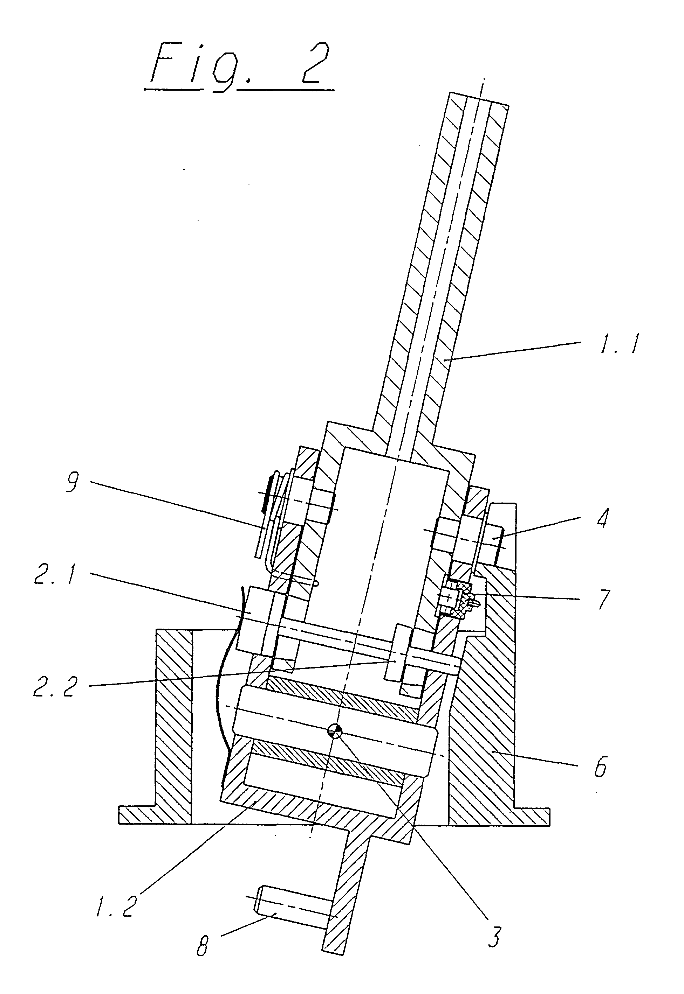

In Figur 2 wird die Stellung des Wählhebels (1) in der Schrittschaltgasse gezeigt. Zum Wechsel der Schaltgasse wird der Wählhebel um die im karosseriefesten Gehäuse (6) gelagerte Wählachse (3) seitlich verschwenkt. Dabei greift die obere Schaltachse (4) in eine komplementäre Ausnehmung im karosseriefesten Gehäuse (6) ein. Diese Ausnehmung des Gehäuses dient als Aufnahme der Schaltachse und gleichzeitig als Lagerstelle für den Wählhebel in dieser Schaltgasse. Während des Wechsels der Schaltgasse wird die Kolbenstange (2) mit den daran befindlichen Kolben (2.1, 2.2) zwischen dem Wählhebeloberteil und dem Wählhebelunterteil außer Eingriff gebracht. Der das Wählhebelunterteil durchdringende Teil der Kolbenstange wird durch eine Anlagefläche im Gehäuse der Schaltvorrichtung in axialer Richtung, entgegen der Bewegungsrichtung des Wählhebels verschoben. In dieser verschwenkten Stellung des Wählhebels ist das Wählhebeloberteil (1.1) in dem Wählhebelunterteil (1.2) um die obere Schaltachse (4) schwenkbar. Die Positionierung des Wählhebels in dieser Schräglage wird ebenfalls durch ein federelastisches erstes Rastmittel ermöglicht. Der Schaltbewegung des Wählhebeloberteiles wirkt ein Federelement (9) entgegen, das das Wählhebelunterteil relativ zum Wählhebeloberteil positioniert. Somit wird nach dem

Herauf- bzw. Herunterschalten eines Getriebeganges durch den Fahrzeugführer das Wählhebeloberteil wieder in seine Ausgangslage zurückgeführt. Zur Simulierung eines Schaltvorganges dient ein zweites Rastmittel (7) am Wählhebeloberteil. Dieses ist baugleich mit dem ersten Rastmittel, es ist lediglich anders dimensioniert.

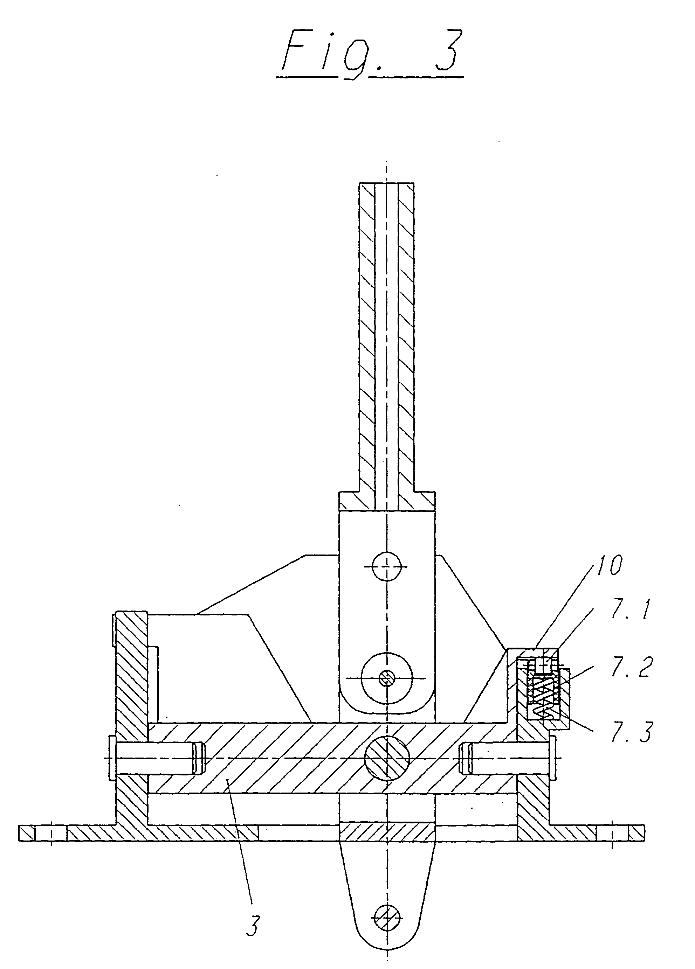

In Figur 3 ist eine Schnittdarstellung einer Schaltvorrichtung für ein Automatikgetriebe in einer verglichen mit der in Figur 1 gezeigten Darstellung um 90° gedrehten Ansicht dargestellt. Der zweiteilige Wählhebel, bestehend aus Wählhebeloberteil (1.1) und Wählhebelunterteil (1.2) ist dabei auf einer Wählachse (3) drehbeweglich gelagert. Als Lagerungselemente können einfache Bolzenstiftverbindungen gewählt werden. In Figur 3 ist ferner ein Rastmittel dargestellt, wie es so auch für die Simulierung der schrittweisen Schaltung Anwendung findet. Das Rastmittel besteht aus einer Walze (7.1), einem Federkäfig (7.2), der eine Spiralfeder (7.3) zur federelastischen Führung der Walze aufnimmt.

Die Walze wird federnd gegen einen Hebelarm (10) der Wählachse gedrückt. Beim Verschwenken des Wählhebels um die Wählachse (3) wird dem Fahrzeugführer auf diese Art und Weise ein Schaltgefühl vermittelt, in dem ein deutlich spürbares Rasten zu verspüren ist. Die Rastmittel (7) dienen somit sowoh der Festlegung des Wählhebels in einer bestimmten Position, als auch der Simulation eines Schaltvorganges in Form einer Wegbegrenzung.

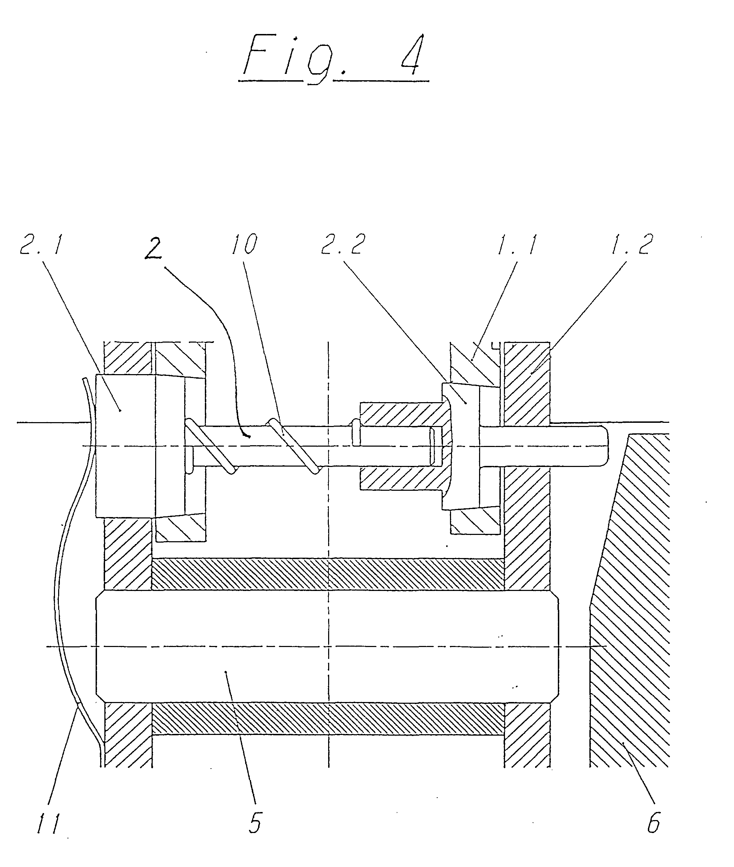

In Figur 4 ist noch einmal die Verbindung zwischen Wählhebeloberteil (1.1) und Wählhebelunterteil (1.2) dargestellt. In der in dieser Figur gezeigten Ausführungsform ist die Kolbenstange (2) einteilig mit dem Kolben (2.1) ausgeführt. Der Kolben (2.2) nimmt in einer Aufnahme die Kolbenstange (2) auf. Dabei stützt sich eine Spiralfeder (10) zwischen den beiden Kolben ab. Diese spezielle Gestaltung der Verbindung beider Wählhebelteile dient einem Spielausgleich. Es kann somit gewährleistet werden, daß die Verbindung stets formschlüssig ist und der Eingriff der Kolben in die Wählhebelteile gleichmäßig erfolgt. Die Spiralfeder (10) wirkt verstärkend mit der Blattfeder (11) zusammen, wenn sich der Wählhebel in der Automatikschaltgasse befindet.

### Bezugszeichenliste

- 1: Wählhebel
- 1.1: Wählhebeloberteil
- 1.2: Wählhebelunterteil
- 2: Kolbenstange
- 2.1: erster Kolben
- 2.2: zweiter Kolben
- 3: Wählachse
- 4: obere Schaltachse
- 5: untere Schaltachse
- 6: Gehäuse
- 7: Rastmittel
- 7.1: Walze
- 7.2: Federkäfig
- 7.3: Spiralfeder
- 8: Koppelglied
- 9: Federelement
- 10: Spiralfeder
- 11: Blattfeder

## Patentansprüche

1. Schaltvorrichtung für ein Automatikgetriebe eines Kraftfahrzeuges mit:
-einer ersten Automatikschaltgasse,
-einer zweiten Schrittschaltgasse für einen manuellen, schrittweisen Schaltbetrieb
-einem um eine Wählachse (3) in die Schaltgassen schwenkbar gelagerten, zweiteiligen Wählhebel (1), bestehend aus einem Wählhebeloberteil (1.1) und einem Wählhebelunterteil (1.2), wobei in der Automatikschaltgasse eine Verbindung zum Übertragen einer Schaltbewegung zwischen dem Wählhebeloberteil und dem Wählhebelunterteil besteht, die Verbindung jedoch durch Schwenken des Wählhebels in die Schrittschaltgasse außer Eingriff gebracht wird,
-einem die Schaltvorrichtung aufnehmenden, karosseriefesten Gehäuse (6), in dem die Wählachse (3) gelagert ist und
-einer ersten, unteren Schaltachse (5), die orthogonal zu der Wählachse (3) und mit dieser in einer Ebene liegt,
**dadurch gekennzeichnet, daß**
das Wählhebeloberteil (1.1) mit dem Wählhebelunterteil (1.2) um die Wählachse (3) verschwenkbar in dem Wählhebelunterteil (1.2) aufgenommen ist und das Wählhebeloberteil in der Schrittschaltgasse in dem in seiner verschwenkten Lage fixierten Wählhebelunterteil (1.2) um eine zweite, einseitig in dem karosseriefesten Gehäuse (6) gelagerte, obere Schaltachse (4) schwenkbar ist.

2. Schaltvorrichtung für ein Automatikgetriebe eines Kraftfahrzeuges nach Anspruch 1,
dadurch gekennzeichnet, daß die Verbindung zum Übertragen einer Schaltbewegung zwischen Wählhebeloberteil (1.1) und Wählhebelunterteil (1.2) formschlüssig ist.

3. Schaltvorrichtung für ein Automatikgetriebe eines Kraftfahrzeuges nach Anspruch 1 oder 2,
dadurch gekennzeichnet, daß
die Verbindung zum Übertragen einer Schaltbewegung zwischen Wählhebeloberteil (1.1) und Wählhebelunterteil (1.2) in Eingriffsrichtung federbelastet ist.

4. Schaltvorrichtung für ein Automatikgetriebe eines Kraftfahrzeuges nach einem oder mehreren der Ansprüche 1 bis 3,
dadurch gekennzeichnet, daß
die Verbindung zwischen Wählhebeloberteil (1.1) und Wählhebelunterteil (1.2) des Wählhebels (1) in der Automatikschaltgasse aus einer Kolbenstange (2) mit zwei Kolben (2.1, 2.2) besteht, die in komplementäre Ausnehmungen der entsprechenden Wählhebelteile eingreifen.

5. Schaltvorrichtung für ein Automatikgetriebe eines Kraftfahrzeuges nach Anspruch 4,
dadurch gekennzeichnet, daß
die Kolben (2.1, 2.2) auf der Kolbenstange (2) montiert sind.

6. Schaltvorrichtung für ein Automatikgetriebe eines Kraftfahrzeuges nach Anspruch 4,
dadurch gekennzeichnet, daß
Kolben (2.1, 2.2) und Kolbenstange (2) einteilig sind.

7. Schaltvorrichtung für ein Automatikgetriebe eines Kraftfahrzeuges nach einem oder mehreren der Ansprüche 1 bis 6,
dadurch gekennzeichnet, daß
in der Schrittschaltgasse ein Federelement (9) das Wählhebeloberteil (1.1) relativ zu dem Wählhebelunterteil (1.2) positioniert und ein zusätzliches Rastmittel (7) eine dem schrittweisen Schaltvorgang entgegenwirkende Kraft zur Simulierung des Schaltvorganges erzeugt.

## Claims

1. Shift arrangement for an automatic transmission of a motor vehicle with:
- a first automatic shift path,
- a second stepped shift path for a manual, stepwise shift operation,
- a two-part selector lever (1) which is mounted so as to be pivotable about a selector shaft (3) into the shift paths and consists of a selector lever top part (1.1) and a selector lever bottom part (1.2), wherein there is a connection in the automatic shift path for transmitting a shift movement between the selector lever top part and the selector lever bottom part, although the connection is disengaged by pivoting the selector lever into the stepped shift path,
- a casing (6), which holds the shift arrangement and is rigid with the body and in which the selector shaft (3) is mounted and
- a first, bottom gearshift lever shaft (5), which lies orthogonally to the selector shaft (3) and in one plane with the latter,
**characterised in that**
the selector lever top part (1.1) is held in the selector lever bottom part (1.2) so as to be pivotable with the selector lever bottom part (1.2) about the selector shaft (3), and the selector lever top part can be pivoted in the stepped shift path in the selector lever bottom part (1.2), which is fixed in its pivoted position, about a second, top gearshift lever shaft (4) mounted on one side in the casing (6), which is rigid with the body.

2. Shift arrangement for an automatic transmission of a motor vehicle according to Claim 1,
characterised in that
the connection for transmitting a shift movement between the selector lever top part (1.1) and the selector lever bottom part (1.2) is positive.

3. Shift arrangement for an automatic transmission of a motor vehicle according to Claim 1 or 2,
characterised in that
the connection for transmitting a shift movement between the selector lever top part (1.1) and the selector lever bottom part (1.2) is spring-loaded in the engagement direction.

4. Shift arrangement for an automatic transmission of a motor vehicle according to one or more of Claims 1 to 3,
characterised in that
the connection between the selector lever top part (1.1) and the selector lever bottom part (1.2) of the selector lever (1) in the automatic shift path consists of a piston rod (2) with two pistons (2.1, 2.2), which engage in complementary recesses in the corresponding selector lever parts.

5. Shift arrangement for an automatic transmission of a motor vehicle according to Claim 4,
characterised in that
the pistons (2.1, 2.2) are mounted on the piston rod (2).

6. Shift arrangement for an automatic transmission of a motor vehicle according to Claim 4,
characterised in that the pistons (2.1, 2.2) and the piston rod (2) are formed in one part.

7. Shift arrangement for an automatic transmission of a motor vehicle according to one or more of Claims 1 to 6,
characterised in that
in the stepped shift path a spring element (9) positions the selector lever top part (1.1) relative to the selector lever bottom part (1.2), and an additional locking means (7) produces a force which opposes the stepwise shift operation to simulate the shift operation.

## Revendications

1. Dispositif de commande d'une transmission automatique d'un véhicule automobile comportant :
- une première voie de commande automatique,
- une deuxième voie de commande pas à pas pour un changement de vitesse manuel, pas à pas,
- un levier de sélection (1) en deux parties, monté de manière à pouvoir pivoter autour d'un axe de sélection (3) dans les voies de commande, constitué d'une partie supérieure (1.1) et d'une partie inférieure (1.2), une liaison étant prévue dans la voie de commande automatique pour transmettre un mouvement de commande entre la partie supérieure et la partie inférieure du levier de sélection, la liaison étant toutefois supprimée par pivotement du levier de sélection dans la voie de commande pas à pas,
- un boîtier (6) solidaire de la carrosserie et recevant le dispositif de commande, dans lequel est monté l'axe de sélection (3), et
- un premier axe de commande (5) inférieur qui est perpendiculaire à l'axe de sélection (3) et qui se situe dans un plan avec celui-ci,
caractérisé en ce que
la partie supérieure (1.1) du levier de sélection est logée dans la partie inférieure (1.2), de manière à pouvoir pivoter avec la partie inférieure (1.2) du levier de sélection autour de l'axe de sélection (3), et en ce que la partie supérieure du levier de sélection dans la voie de commande pas à pas, peut pivoter dans la partie inférieure (1.2) du levier de sélection fixée dans sa position pivotée, autour d'un deuxième axe de commande (4) supérieur, monté d'un côté dans le boîtier (6) solidaire de la carrosserie.

2. Dispositif de commande d'une transmission automatique d'un véhicule automobile selon la revendication 1,
caractérisé en ce que
la liaison pour la transmission d'un mouvement de commande entre la partie supérieure (1.1) et la partie inférieure (1.2) du levier de sélection s'effectue par complémentarité de forme.

3. Dispositif de commande d'une transmission automatique d'un véhicule automobile selon la revendication 1 ou 2,
caractérisé en ce que
la liaison pour la transmission d'un mouvement de commande entre la partie supérieure (1.1) et la partie inférieure (1.2) du levier de sélection est soumise à l'action d'un ressort dans le sens de l'engagement.

4. Dispositif de commande d'une transmission automatique d'un véhicule automobile selon une ou plusieurs des revendications 1 à 3,
caractérisé en ce que
la liaison entre la partie supérieure (1.1) et la partie inférieure (1.2) du levier de sélection (1) dans la voie de commande automatique, est constituée d'une tige de piston (2) avec deux pistons (2.1, 2.2) qui s'engagent dans des évidements complémentaires des parties correspondantes du levier de sélection.

5. Dispositif de commande d'une transmission automatique d'un véhicule automobile selon la revendication 4,
caractérisé en ce que
les pistons (2.1, 2.2) sont montés sur la tige de piston (2).

6. Dispositif de commande d'une transmission automatique d'un véhicule automobile selon la revendication 4,
caractérisé en ce que
les pistons (2.1, 2.2) et la tige de piston (2) sont en une partie.

7. Dispositif de commande d'une transmission automatique d'un véhicule automobile selon une ou plusieurs des revendications 1 à 6,
caractérisé en ce que
dans la voie de commande pas à pas, un élément à ressort (9) positionne la partie supérieure (1.1) du levier de sélection par rapport à la partie inférieure (1.2) et en ce qu'un moyen d'encliquetage (7) supplémentaire produit une force, qui s'oppose à l'opération de commande pas à pas, pour simuler l'opération de changement de vitesse.
